# EUROPÄISCHE PATENTSCHRIFT

(11) **EP 2 355 974 B1**
(45) Veröffentlichungstag und Bekanntmachung des Hinweises auf die Patenterteilung: **27.01.2016**
(21) Anmeldenummer: 09744037.4
(22) Anmeldetag: 18.09.2009
(51) Int. Cl.: B31B 3/00, B29C 53/52, B29L 9/00, B65B 9/20, B31B 1/26, B31B 1/64

(54) **VERFAHREN UND VORRICHTUNG ZUR HERSTELLUNG VON BEHÄLTERARTIGEN VERBUNDVERPACKUNGEN**
METHOD AND DEVICE FOR PRODUCING CONTAINER-LIKE COMPOSITE PACKAGINGS
PROCÉDÉ ET DISPOSITIF POUR FABRIQUER DES EMBALLAGES COMPOSITES DU TYPE CONTENANT

(30) Priorität: 28.11.2008 DE 102008061005; 04.06.2009 DE 102009024365
(43) Veröffentlichungstag der Anmeldung: 17.08.2011
(73) Patentinhaber: SIG Technology AG, 8212 Neuhausen am Rheinfall (CH)
(72) Erfinder: ALEF, Ulrich, 41844 Wegberg (DE); DAHLMANNS, Kurt, 52538 Gangelt (DE); ECCARIUS, Michael, 52441 Linnich (DE)
(74) Vertreter: Patentanwälte Klickow & Partner Partnerschaftsgesellschaft mbB
(86) Internationale Anmeldenummer: PCT/DE2009/001336
(87) Internationale Veröffentlichungsnummer: WO 2010/060393

(56) Entgegenhaltungen:
- EP-A1- 1 116 659
- EP-A2- 0 204 137

## Beschreibung

Die Erfindung betrifft ein Verfahren zur Herstellung von behälterartigen Verbundverpackungen, bei dem ein bahnförmiges Material aus einem Verbund, der mindestens eine Lage aus Karton und mindestens eine Lage aus einem Kunststoff enthält, gefaltet, mit einer Siegelnaht versehen und in jeweils zur Ausbildung eines Behälters vorgesehene Abschnitte zertrennt wird, sowie bei dem die Siegelnaht vor einer Zertrennung des bahnförmigen Materials in einzelne Abschnitte erzeugt wird

Die Erfindung betrifft darüber hinaus eine Vorrichtung zur Herstellung von behälterartigen Verbundverpackungen, die eine Transporteinrichtung für ein bahnförmiges Material aus einem Verbund aufweist, der aus mindestens einer Lage aus Karton und mindestens einer Lage aus einem Kunststoff besteht, sowie die mindestens eine Falteinrichtung für das bahnförmige Material, mindestens eine Siegeleinrichtung zur Erzeugung einer Siegelnaht und mindestens eine Trenneinrichtung zur Unterteilung des bahnförmigen Materials in einzelne zur Ausbildung jeweils eines Behälters vorgesehene Abschnitte aufweist, sowie bei der in einer Transportrichtung des bahnförmigen Materials die Siegeleinrichtung vor der Trenneinrichtung angeordnet ist

Derartige Verbundverpackungen werden beispielsweise verwendet, um in einer Ausführungsform als Kartonverpackung eine Aufnahme von flüssigen Lebensmitteln zu dienen. Ein umfangreiches Anwendungsgebiet besteht beispielsweise in der Verpackung von Milch oder von Fruchtsäften. Gemäß anderen Anwendungsbeispielen folgt eine Verpackung von Nahrungsmitteln, beispielsweise von Suppen, Soßen oder Gemüse. Ebenfalls gibt es Anwendungen, bei denen stückige Produkte oder Produkte mit stückigen Anteilen verpackt werden. Anwendungen können sich somit auf fließfähige, schüttfähige, oder pasteuse Produkte beziehen.

Hinsichtlich der Herstellung derartiger Verbundverpackungen sowie der Durchführung des Füllvorganges sind im wesentlichen zwei unterschiedliche Verfahren bekannt. Gemäß einem Verfahren wird einer Einrichtung, die sowohl die Behälterherstellung als auch den Füllvorgang durchführt, ein vorbereitetes bahnförmiges Material zugeführt und alle einzelnen Prozeßschritte werden in dieser Einrichtung vorgenommen. Eine derartige kombinierte Prozeßdurchführung weist zwar Kostenvorteile auf, führt aber zu einer äußerst komplexen Einrichtung, die sich als störungsanfällig erweist.

Gemäß einer anderen Ausführungsform werden zunächst gefaltete und bereits mit einer Längsnaht versehene Halbfertigprodukte für die Verpackungen hergestellt, die im Bereich eines vorgesehenen Bodens sowie im Bereich eines vorgesehenen oberen Endes der späteren Verpackung noch offen sind und flach gefaltet zur Fülleinrichtung transportiert werden können. Die Halbfertigprodukte sind bereits außenseitig fertig bedruckt und gegebenenfalls mit Ausgießern versehen. Im Bereich der Fülleinrichtung erfolgt in der Regel zunächst ein Verschließen des Bodenbereiches durch eine Quernaht, anschließend eine Befüllung mit dem Füllgut und danach eine Versiegelung im Bereich des oberen Endes des Behälters, beispielsweise in Form eines Giebels, eines Flachgiebels sowie gegebenenfalls unter Verwendung eines Klapp- oder Schraubverschlusses.

Die Herstellung der Halbfertigprodukte der Verpackung und die Aufstellung der Fülleinrichtung können örtlich getrennt und gegebenenfalls mit großen Entfernungen relativ zueinander erfolgen. Insbesondere ist es möglich, die Herstellung der Halbfertigprodukte bei einem Verpackungshersteller durchzuführen und die Abfüllung bei einem Produkthersteller vorzunehmen.

Die Herstellung der Halbfertigprodukte für die Verpackungen erfolgt in der Regel derart, daß zunächst von einem rollenförmig bevorrateten bahnförmigen Material nach der Durchführung eines Bedruckens der Außenflächen und nach einem Durchführen von Rill- oder Falzvorgängen ein Zerschneiden in Einzelabschnitte erfolgt. Die Einzelabschnitte werden dann gefaltet und anschließend mit einer Längsnaht versehen, die sich von einem für die spätere Verpackung vorgesehenen Bodenbereich bis in einen oberen Endbereich der späteren Verpackung erstreckt. Die Längsnaht wird häufig durch ein Verschweißen von Kunststoffanteilen der Verbundverpackung durchgeführt. Nach einer Herstellung dieser einzelnen Halbfertigprodukte für die Verpackungen werden die Halbfertigprodukte gestapelt und in vorgebbaren Gruppierungen abtransportiert.

Die Herstellung der Halbfertigprodukte für die Verpackungen erfolgt mit einer äußerst großen Geschwindigkeit, um hohe Ausstoßraten pro Zeiteinheit zu unterstützen. In einem vorangehend noch nicht erwähnten ersten Verfahrensschritt werden aus bahnförmigen Lagen von Kartonage und unter Verwendung von Metallfolien sowie unter Aufbringung von Kunststoffbeschichtungen, beispielsweise aus Polyethylen, die bahnförmigen Ausgangsmaterialien für die Verbundverpackungen hergestellt. Diese Verfahrensschritte können in kontinuierlichen Verfahren mit sehr hohen Transportgeschwindigkeiten der Einzelkomponenten durchgeführt werden.

Es hat sich nunmehr erwiesen, daß eine weitere Erhöhung der Produktionsgeschwindigkeit insbesondere durch die Prozeßschritte des Faltens der Materialzuschnitte sowie des Anbringens der sich in Längsrichtung erstreckenden Siegelnähte begrenzt ist. Durch Detailoptimierungen konnten zwar auch hier bereits deutliche Produktionsfortschritte erreicht werden, es können aber noch nicht alle Anforderungen erfüllt werden, die an eine störungsarme, zuverlässige und zugleich auch preiswerte Produktion gestellt werden.

In der EP 1 116 659 A1 wird ein Verfahren zur Herstellung von behälterartigen Verbundverpackungen beschrieben. Ein bahnförmiges Material wird gefaltet und mit einer Siegelnaht versehen. Das bahnförmige Material wird in einzelne Abschnitte zertrennt, wobei aus jedem der Abschnitte ein Behälter geformt wird.

Ein weiteres Verfahren zur Erzeugung einer Siegelnaht im Bereich eines bahnförmigen Materials sowie zur Zertrennung des bahnförmigen Materials in einzelne Abschnitte wird in der EP 0 204 137 A2 beschrieben.

Aufgabe der vorliegenden Erfindung ist es daher, ein Verfahren der einleitend genannten Art derart zu verbessern, daß eine gesteigerte Produktionsgeschwindigkeit unterstützt wird.

Diese Aufgabe wird erfindungsgemäß durch das Verfahren gemäß Anspruch 1 gelöst.

Weitere Aufgabe der vorliegenden Erfindung ist es, eine Vorrichtung der einleitend genannten Art derart zu konstruieren, daß eine gesteigerte Produktionsgeschwindigkeit erreicht wird.

Diese Aufgabe wird erfindungsgemäß durch die Vorrichtung gemäß Anspruch 8 gelöst.

Die gegenüber dem Stand der Technik vorgenommene Vertauschung der zeitlichen Durchführung der Prozeßschnitte des Erzeugens der Siegelnaht und des Zerteilens des bahnförmigen Materials in einzelne Zuschnitte führt zu erheblichen Vorteilen. Sowohl die Durchführung des der Versiegelung vorangehenden Faltvorganges als auch die Erzeugung der Siegelnaht selbst können in einem kontinuierlichen Prozeß bei einer kontinuierlichen Bewegung des zu beaufschlagenden Materials durchgeführt werden. Dies unterstützt zum einen deutlich erhöhte Transportgeschwindigkeiten des Materials bei der Prozeßdurchführung und somit drastisch verkürzte Prozeßzeiten. Aufgrund der kontinuierlichen Durchführung der zugehörigen Prozeßschritte können darüber hinaus die jeweiligen Prozeßparameter in einfacher Weise und mit äußerst hoher Genauigkeit konstant gehalten werden. Dies unterstützt eine sehr hohe Qualität der Prozeßdurchführung und ermöglicht somit bei einer vorgegebenen Produktqualität eine weitere Steigerung der Produktionsgeschwindigkeit.

Eine bevorzugte Anwendung besteht in der Herstellung von Zuschnitten oder Mänteln für Behälter, die zur aseptischen Verpakkung von Produkten, insbesondere von Lebensmitteln, vorgesehen sind.

Zur Vorbereitung der Faltlinien erweist es sich als zweckmäßig, daß zur Ausbildung von Faltlinien das bahnförmige Material gerillt wird.

Ebenfalls ist daran gedacht, daß das bahnförmige Material gefalzt wird.

Eine typische Anwendung besteht darin, daß eine Faltung und Versiegelung zur Bereitstellung eines Behälters mit einer im wesentlichen rechteckförmigen Querschnittfläche durchgeführt wird. Grundsätzlich sind auch beliebige andere Formen der Querschnittfläche möglich, beispielsweise dreieckig, polygonal oder gerundet.

Die Herstellung von Siegelnähten wird dadurch unterstützt, daß die Siegelnaht durch ein Verschmelzen von Kunststoffanteilen des bahnförmigen Materials durchgeführt wird. Für die Herstellung von aseptischen Siegelnähten ist dafür zu sorgen, daß das Produkt nicht in Kontakt mit offenen Schnittkanten kommen kann.

Gemäß einer vereinfachten Ausführungsform ist daran gedacht, daß die Herstellung der Siegelnaht nach einem Falten des bahnförmigen Materials und nach einem zusammenlegen der gefalteten Struktur zu einem flachen schlauchartigen Gebilde durchgeführt wird.

Eine alternative Herstellungsvariante besteht darin, daß die Siegelnaht nach einem Falten des bahnförmigen Materials um einen Innenraum herum hergestellt wird.

In den Zeichnungen sind Ausführungsbeispiele der Erfindung schematisch dargestellt. Es zeigen:
- Fig. 1: eine perspektivische Darstellung zur Veranschaulichung eines Faltvorganges zur Überführung eines bahnförmigen flachen Materials in ein gefaltetes schlauchartiges Material,
- Fig. 2: eine schematische Darstellung zur Veranschaulichung von Faltlinien eines Zuschnittbereiches für einen Behälter,
- Fig. 3: eine schematische Seitenansicht eines Anlagenteiles zur Veranschaulichung eines Rill- und Stanzvorganges zur Vorbereitung einer Materialfaltung,
- Fig. 4: eine schematische Seitenansicht eines Anlagenteiles zur Zerteilung einer breiten Bahn in Einzelbahnen sowie zur Vorfaltung, Fertigfaltung und anschließenden Herstellung einer Siegelnaht, die sich in einer Längsrichtung erstreckt,
- Fig. 5: eine schematische Seitenansicht eines Anlagenteiles zum Abtransport von Behälterzuschnitten,
- Fig. 6: eine erste Arbeitsposition im Bereich einer Vorhaltung des bahnförmigen Materials,
- Fig. 7: eine Veranschaulichung eines Prozeßschrittes im Anschluß an den Prozeßschritt in Fig. 6,
- Fig. 8: eine Fortsetzung des Verfahrensablaufes gemäß Fig. 7,
- Fig. 9: ein Abschluß des Vorfaltvorganges,
- Fig. 10: ein erster Prozeßschritt einer Fertigfaltung,
- Fig. 11: ein zweiter Prozeßschritt der Fertigfaltung gemäß Fig. 10,
- Fig. 12: eine weitere Fortsetzung des Prozeßschrittes gemäß Fig. 11,
- Fig. 13: ein abschließender Prozeßschritt der Fertigfaltung,
- Fig. 14: eine andere Ausführungsform eines ersten Prozeßschrittes zur Fertigfaltung,
- Fig. 15: eine Fortsetzung des Prozeßablaufes gemäß Fig. 14 und
- Fig. 16: ein abschließender Prozeßschritt der Fertigfaltung gemäß Fig. 14 und Fig. 15.

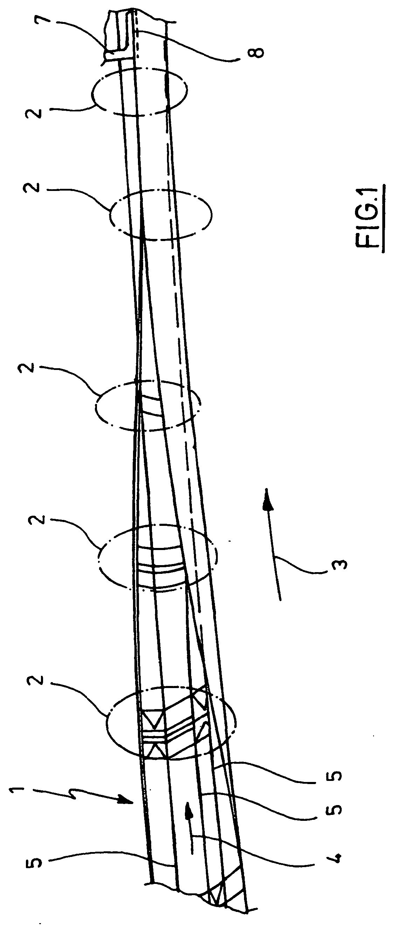

Fig. 1 zeigt eine Prinzipdarstellung zur Veranschaulichung des erfindungsgemäßen Grundprinzips. Ein bahnförmiges Material (1) wird entlang von Führungselementen (2) in einer Transportrichtung (3) bewegt. Die Transportrichtung (3) entspricht hierbei einer Längsrichtung (4) des bahnförmigen Materials (1). In Längsrichtung (4) weist das bahnförmige Material (1) linienartige Materialschwächungen (5) auf. Die Materialschwächungen (5) können beispielsweise durch Rilllinien, einen Materialabtrag, eine Perforation oder eine thermische Beanspruchung hergestellt werden. Für eine Herstellung von quaderartigen Behältern werden typischerweise vier linienartige Materialschwächungen (5) hergestellt, um im Bereich dieser Materialschwächungen (5) Faltvorgänge des bahnförmigen Materials (1) zu unterstützen und die Lokalisierung von Faltlinien exakt vorzugeben. Bei anderen Geometrien der Querschnittfläche werden auch mehr oder weniger Faltlinien verwendet.

Die Führungselemente (2) haben die Aufgabe, den Faltvorgang des bahnförmigen Materials (1) um die Materialschwächungen (5) herum vorzugeben und kontrolliert durchzuführen. Im einfachsten Fall bestehen die Führungselemente (2) aus Schienen, an denen das bahnförmige Material (1) entlang geführt wird. Zur Verminderung von Reibungsverlusten ist insbesondere daran gedacht, im Bereich der Führungselemente (2) das bahnförmige Material (1) beaufschlagende Mittel zur Lineareinformung anzuordnen.

In Transportrichtung (3) sind typischerweise eine Mehrzahl von Führungselementen (2) hintereinander und relativ zueinander mit einem Abstand angeordnet. Zur Unterstützung eines kontinuierlichen Faltvorganges sind die Mittel zur Lineareinformung derart im Bereich der Führungselemente (2) positioniert, daß in Transportrichtung (3) hintereinander ein jeweils stärkerer Fortschritt des Faltvorganges vorgegeben wird. Als Resultat der Lineareinformung entsteht ein schlauchartig gefaltetes Material, das räumlich derart angeordnet ist, daß entweder eine innere Querschnittfläche umschlossen wird oder daß die Schlauchwandungen flach aufeinander gefaltet liegen.

Nach einem Abschluß der Lineareinformung ist das zur schlauchartigen Grundkontur gefaltete bahnförmige Material (1) dafür vorgesehen, eine Querschnittfläche quer zur Längsrichtung (4) bereitzustellen, die von geraden Wandungsabschnitten begrenzt ist. Typischerweise ist eine derartige Querschnittfläche quadratisch ausgebildet.

Nach einer Beendigung der Lineareinformung wird im Bereich einer Siegeleinrichtung (7) eine Siegelnaht (8) erzeugt, die sich in der Transportrichtung (3) erstreckt. Die Siegelnaht (8) kann beispielsweise durch ein Verschweißen von im bahnförmigen Material (1) enthaltenen Anteilen aus Kunststoff erfolgen. Ebenfalls ist es möglich, entsprechende Materialien zur Durchführung eines Schweißvorganges separat zuzuführen oder die Siegelnaht (8) durch ein Verkleben zu erzeugen.

Im Hinblick auf die bahnförmigen Materialien (1) können eine Vielzahl unterschiedlicher Materialien zur Verwendung kommen. Für die Herstellung von Verbundverpackungen werden typischerweise entsprechende verbundmaterialien eingesetzt. Grundsätzlich können aber auch andere Materialbahnen gemäß dem in Fig. 1 dargestellten Prinzip bearbeitet werden, beispielsweise bahnförmige Materialien (1) aus Papier, Karton, Kunststoff, Metall oder Verbunden und/oder Kombinationen dieser Materialien.

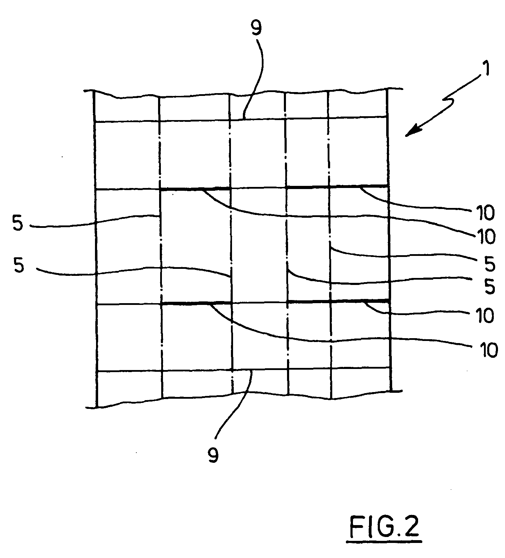

Fig. 2 zeigt einen typischen Abschnittsbereich des bahnförmigen Materials (1), der zur Herstellung eines Behälters vorgesehen ist. Zu erkennen sind zunächst einmal die Materialschwächungen (5), die auch bereits in Fig. 1 zu erkennen sind. Darüber hinaus sind Trennlinien (9) zu erkennen, entlang derer nach einer Faltung des bahnförmigen Materials (1) zum schlauchförmigen Material und nach einer Erzeugung der in Fig. 1 veranschaulichten Siegelnaht (8) eine Zertrennung des bahnförmigen Materials (1) in einzelne Zuschnitte durchgeführt wird. Darüber hinaus sind Querlinien (10) zu erkennen, die gleichfalls wie die Materialschwächungen (5) durch Falzungen, Rillungen oder Perforationen hergestellt sein können. Entlang der Querlinien (10) erfolgt eine Faltung der entsprechenden Zuschnitte derart, daß beim späteren Behälter ein Bodenbereich und ein oberer Abschlußbereich hergestellt werden.

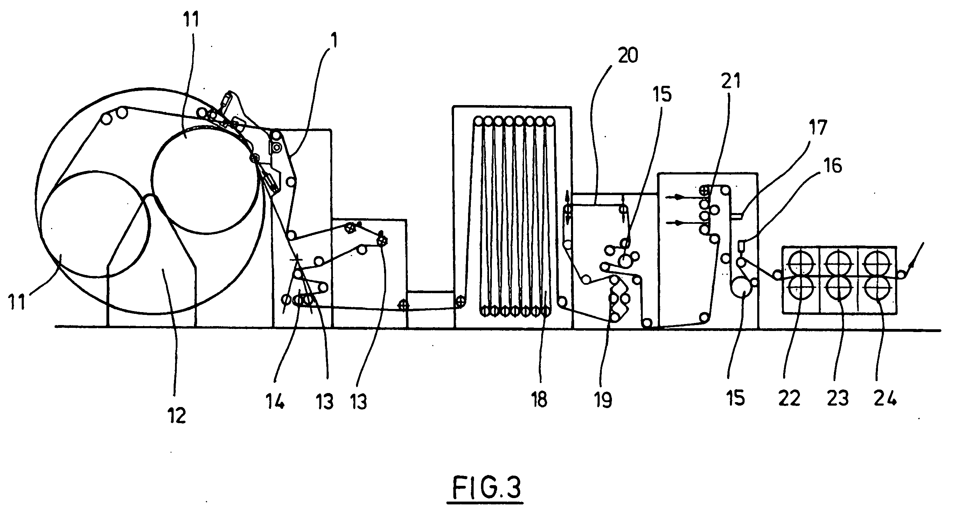

Fig. 3 zeigt einen in prozeßtechnischer Hinsicht ersten Anlagenbereich für die Verarbeitung des bahnförmigen Materials (1). Das bahnförmige Material (1) wird der Einrichtung auf Rollen (11) zugeführt. Zur Unterstützung eines kontinuierlichen Betriebes sind im Bereich einer Abrollung (12) zwei Rollen (11) angeordnet, wobei eine der Rollen (11) die Anlage mit dem aktuell zu verarbeitenden bahnförmigen Material (1) speist und die zweite der Rollen (11) nach einem Verbrauch der ersten der Rollen (11) eine unmittelbare Produktionsfortsetzung unterstützt. Die abgerollte Rolle (11) kann dann durch eine neue Rolle (11) ersetzt werden.

Im Bereich der Rollen (11) wird das bahnförmige Material (1) typischerweise fertig beschichtet und bereits bedruckt bevorratet. Bei einem Wechsel der Zufuhr des bahnförmigen Materials von der ersten Rolle (11) zur zweiten Rolle (11) wird der Bahnanfang der neuen Rolle (11) mit dem Bahnende der vorherigen Rolle (11) innerhalb einer Verbindungsstation (13) zusammengefügt. Dies kann beispielsweise unter Verwendung eines Klebebandes erfolgen.

Aufgrund der vergleichsweise großen Masse der Rollen (11) sowie der gesamten Abrollung (12) erweist sich eine Steuerung oder Regelung einer Transportgeschwindigkeit des bahnförmigen Materials (1) durch Beeinflussung der Abrollung (12) als nicht ausreichend schnell genug. Es wird statt dessen mindestens eine Pendelwalze (14) verwendet, die mit geringer Massenträgheit kurzfristig die Bahnspannungsdifferenzen des bahnförmigen Materials (1) in Folge eines Rollenwechsels konstant halten kann.

Zur Vorgabe einer definierten Spannung innerhalb des bahnförmigen Materials (1) wird mindestens eine Zugwalze (15) verwendet. Zusätzlich ist im Bereich der Abrollung (12) eine Bremseinrichtung angeordnet. Durch das Zusammenwirken der Bremseinrichtung und der Zugwalze (15) wird die gewünschte Bahnspannung vorgegeben.

Eine konkrete Bereitstellung von Längeninformationen für das bahnförmige Material (1) wird von einem Steuerungssensor (16) durchgeführt. Unter Verwendung des Steuerungssensors (16) bzw. einer Mehrzahl von Steuerungssensoren (16) ist es möglich, Längenunterschiede im bahnförmigen Material (1) zu erfassen und diese Längenunterschiede durch eine Veränderung der relativen Bahnlage zu den Folgewerkzeugen durch eine geeignete Ansteuerung der Zugwalze (15) und damit durch eine Veränderung der Bahnspannung auszugleichen.

Die unter Verwendung der Zugwalze (15) erzeugte Bahnspannung kann von einem Bahnspannungssensor (17) erfaßt werden. Gemäß des dargestellten Ausführungsbeispiels werden zur Erzeugung der Zugspannung mehrere Zugwalzen (15) verwendet.

Bei einer Ausführungsform der vorstehend bereits erwähnten Verbindung des Endes der abgerollten Rolle (11) und des Anfanges der neuen Rolle (11) ist es in der Regel erforderlich, im Bereich der Verbindungsstation (13) während der Durchführung dieses Verbindungsvorganges einen Stillstand des bahnförmigen Materials (1) vorzugeben, um eine Stoß zu Stoß Verbindung herzustellen. Um während dieser Stillstandszeit keine Produktionsunterbrechung hervorzurufen, wird ein Rollenspeicher (18) verwendet. Der Rollenspeicher (18) beinhaltet eine Vielzahl von Rollen, über die das bahnförmige Material (1) geführt ist. Durch eine Abstandsveränderung der Rollen relativ zueinander wird eine Speicherlänge des Rollenspeichers (18) verändert. Durch ein Zusammenfahren der Rollen kann somit auch bei einem Bahnstillstand im Bereich der Verbindungsstation (13) der nachfolgenden Anlage bahnförmiges Material (1) zugeführt werden. Durch einen zeitweise schnelleren Abspulvorgang im Bereich der Abrollung (12) kann dann anschließend der Rollenspeicher (18) wieder aufgefüllt werden. Bei anderen Verfahren zum Rollenwechsel kann auch auf einen Bandstillstand und damit auf den Rollenspeicher (18) verzichtet werden.

Im Anschluß an den Rollenspeicher (18) wird das bahnförmige Material (1) zunächst einer Vorbrechstation (19) zugeführt. Die Verwendung einer derartigen Vorbrechstation (19) ist zweckmäßig, da in Folge der Lagerung des bahnförmigen Materials (1) auf den Rollen (11) die Fasern der aus Karton bestehenden Schichten derart ausgerichtet sind, daß eine Wölbung entsteht. Durch den Prozeßschritt des Vorbrechens kann dieser unerwünschte Effekt eliminiert bzw. zumindest minimiert werden.

Das Vorbrechen im Bereich der Vorbrechstation (19) wird typischerweise derart durchgeführt, daß das bahnförmige Material im Bereich der Vorbrechstation (19) entgegen der Abwickelrichtung mit einem geringen Biegeradius umgelenkt wird. Dies kann unter Verwendung einer mit einem geringen Durchmesser versehenen Rolle bei einer Bahnführung gegen die Wickelrichtung realisiert werden. Durch eine Änderung des Vorbrechwinkels in der Vorbrechstation (19) ist es möglich, das resultierende Vorbrechmoment kontinuierlich dem aktuellen Durchmesser der Rolle (11) anzupassen. Hierzu wird eine entsprechende Steuerung verwendet.

In Transportrichtung hinter der Vorbrechstation (19) ist eine Bahnkantenseitenregelung (20) positioniert. Diese Bahnkantenseitenregelung (20) gleicht einen Bahnversatz quer zur Längsrichtung aus, der beispielsweise durch die Verbindung der Bahnenden bei einem Wechsel von einer der Rollen (11) zur anderen der Rollen (11) auftreten kann.

Um im Bereich des bahnförmigen Materials (1) Perforationen zu erzeugen, die bei dem nach Durchlaufen aller Prozeßschritte hergestellten Behälter die Funktion von Öffnungshilfen besitzen, ist es möglich, einen Laser (21) zu verwenden. Ebenfalls ist es möglich, derartige Perforationen durch ein mechanisches Perforationswerkzeug (22) herzustellen. Unter Verwendung eines Nutwerkzeuges (23) werden die in Fig. 2 veranschaulichten Querlinien (10) als Knickfalten hergestellt. In Abhängigkeit von der Gestaltung der später herzustellenden Verpackung können vom Nutwerkzeug (23) auch diagonal zur Bahnlängsrichtung verlaufende Knickfalten hergestellt werden.

Von einem Längsnutwerkzeug (24) werden die in Fig. 2 dargestellten in Bahnlängsrichtung verlaufenden Materialschwächungen (5) hergestellt.

Bei einer Bevorratung von bereits fertig bedrucktem bahnförmigen Material (1) im Bereich der Rollen (11) ist es zwingend erforderlich, die vom Perforationswerkzeug (22) sowie vom Nutwerkzeug (23) durchgeführten Materialbearbeitungen exakt vorgegeben relativ zum Druckbild anzuordnen. Um diese exakte Anordnung relativ zueinander zu gewährleisten, erfaßt der Steuerungssensor (16) typischerweise eine Druckmarke, die bei einer Bedruckung des bahnförmigen Materials (1) von einer Druckmaschine aufgebracht wurde. Diese Druckmarke dient als Steuerungsreferenz für die folgenden Arbeitsschritte und ermöglicht eine Zuordnung relativ zum vorhandenen Druckbild. Entsprechend der vom Steuerungssensor (16) erfaßten Position der Druckmarke erfolgt von der Maschinensteuerung unter Berücksichtigung der Meßwerte der Bahnspannungssensoren (17) ein entsprechender Antrieb der Zugwalzen (15) sowie der Werkzeuge (22, 23) bzw. des Lasers (21).

Gemäß einer alternativen Ausführungsform ist es auch möglich, die quer bzw. diagonal verlaufenden Nuten und/oder die Längsnuten und/oder die Perforationen bereits vor einem Aufrollen des bahnförmigen Materials (1) auf die Rollen (11) zu erzeugen und entsprechend vorbereitetes Material auf den Rollen (11) im Bereich der Abrollung (12) anzuordnen. Die konkrete Art und Weise der Prozeßrealisierung wird hier von den örtlichen Gegebenheiten, den konkreten Produktionsanforderungen sowie der konkreten Produktgestaltung vorgegeben.

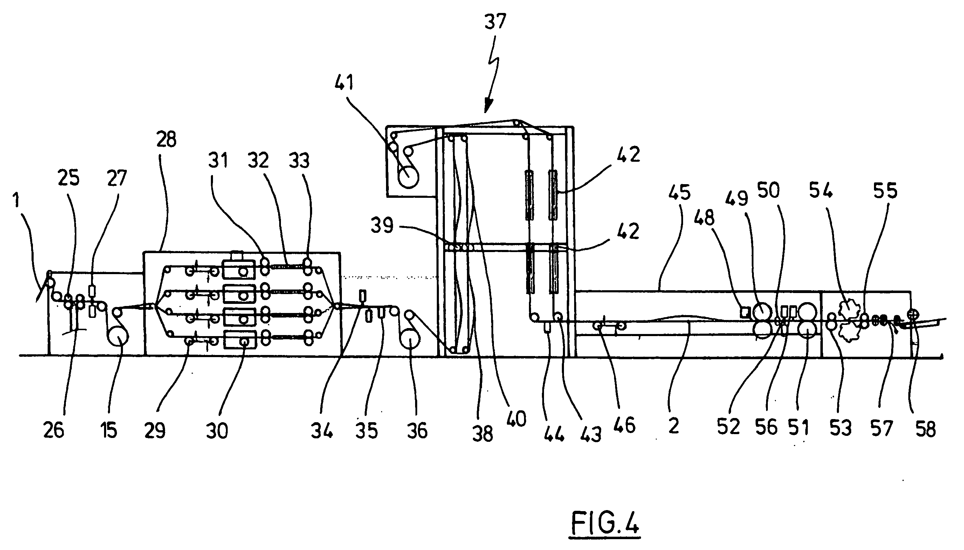

Nach einem Verlassen des in Fig. 3 dargestellten Anlagenteils wird das entsprechend vorbehandelte bahnförmige Material (1) dem in Fig. 4 dargestellten Anlagenteil zugeführt. Das bahnförmiges Material (1) gelangt hier zunächst in den Bereich einer Längsschneideinrichtung (25), die das bahnförmige Material (1) in schmalere Einzelbahnen unterteilt. Der Verfahrensschritt ist erforderlich, da typischerweise quer zur Längsrichtung der Bahn nebeneinander mehrere der in Fig. 2 dargestellten Zuschnitte aufgebracht sind. Durch die Längsschneideinrichtung (25) wird das bahnförmige Material (1) typischerweise in Einzelbahnen unterteilt, die jeweils die in Fig. 2 dargestellte Bahnbreite besitzen. Im Bereich der Schneideinrichtung (25) können beispielsweise rotierende Schneidmesser angeordnet sein.

Bei einer typischen Bahndimensionierung für herzustellende Verpackungen aus Verbundmaterial befinden sich beim Ausgangsmaterial vier Zuschnitte gemäß Fig. 2 nebeneinander. Es folgt somit eine Aufteilung des bahnförmigen Materials (1) in vier Einzelbahnen, zusätzlich wird typischerweise links und rechts ein Randstreifen abgeschnitten. Die Randabschnitte können von einer Absaugeinrichtung (26) wegtransportiert werden. Von einer Überwachungseinrichtung (27) wird die Lage aller erzeugten Nuten und Perforationen relativ zur bereits erwähnten Druckmarke erfaßt, überdacht und gegebenenfalls einer Meßdatenabspeicherung zugeführt. Bei erfaßten Abweichungen erfolgt von der Maschinensteuerung aus eine Einflußnahme auf die Bahnkantenseitenregelung (20) und/oder die Zugwalzen (15).

Im Bereich einer Schälstation (28) werden vorbereitende Maßnahmen zur Herstellung der in Fig. 1 veranschaulichten Siegelnaht (8) durchgeführt, wobei sich diese vorbereitenden Maßnahmen auf die mechanische Bearbeitung des bahnförmigen Materials (1) beziehen. Gemäß einer typischen Ausführungsform beziehen sich diese mechanischen vorbereitenden Maßnahmen auf ein Schälen, Rillen, Umlegen und Bügeln. Eine derartige Prozeßdurchführung unterstützt insbesondere die Herstellung einer aseptischen Nahtkante, die durch eine Innenlage aus Polyethylen des bahnförmigen Materials (1) geschützt ist.

Im Bereich der Schälstation (28) werden die von der Längsschneideinrichtung (25) hergestellten Einzelbahnen, beim dargestellten Ausführungsbeispiel vier Einzelbahnen, zunächst einer Bahnkantenausrichteinrichtung (29) zugeführt. Hier erfolgt eine Ausrichtung der Einzelbahnen quer zur Längsrichtung. Anschließend wird an einer der jeweiligen Bahnkanten der jeweiligen Einzelbahnen von einer Schälstation (30) ein Streifen aus Polyethylen und Karton abgeschält. Der hierdurch entstehende schmale geschälte Randstreifen der Einzelbahn wird von einer Rilleinrichtung (31) mittig genutet und im Bereich einer Umlegvorrichtung (32) an dieser Nutkante um 180° umgelegt. Unter Verwendung einer Bügeleinrichtung (33) erfolgt abschließend ein Bügeln der umgelegten Naht.

Hinter der Schälstation (28) ist eine Überwachungseinrichtung (34) angeordnet, die die Abmessungen der umgelegten Naht erfaßt, prüft und gegebenenfalls in der Meßdatenabspeicherung ablegt. In Abhängigkeit von den konkreten Meßergebnissen der Überwachungseinrichtung (34) erfolgt eine Positionierung der Bahnkantenausrichteinrichtung (29).

Alternativ zur vorstehend erläuterten Herstellung einer schmalen Umlagenaht ist es auch möglich, im entsprechenden Bereich einen Streifen aus Polyethylen zu verwenden. Ebenfalls ist es möglich, eine Versiegelung der offenen Kartonkanten vorzunehmen. Eine weitere Variante ist die Verwendung eines Klebstoffes.

In Transportrichtung hinter der Überwachungseinrichtung (34) ist ein Spannungssensor (35) angeordnet, der die Bahnspannung vor einer Zugwalze (36) mißt. In Transportrichtung hinter der Zugwalze (36) ist eine Vorfaltstation (37) angeordnet. Die Vorfaltstation (37) dient dazu, die in Fig. 2 dargestellten Materialschwächungen (5), die typischerweise als Längsnuten ausgebildet sind, vorzubrechen und zu bügeln. Hierzu werden die Materialbahnen durch eine Formeinrichtung (38) transportiert und anschließend einer Bügelstation (39) zugeführt. In Transportrichtung hinter der Bügelstation (39) ist eine Entfalteinrichtung (40) positioniert, die nach der Durchführung der Vorformung und des Vorfaltens das bahnförmige Material wieder auffaltet und in eine flache Bandform zurückführt.

Gemäß der dargestellten Ausführungsform in Fig. 4 und somit nach einer schlaufenartigen Bandführung um eine weitere Zugwalze (41), bevorzugt jedoch direkt, wird das bahnförmige Material einer oder mehreren Aktivierungsstationen (42) zugeführt. Im Bereich der Aktivierungsstation (42) werden die streifenförmigen Einzelbahnen an den jeweiligen beiden Bahnkanten erhitzt. Die Erhitzung kann beispielsweise durch Heißluft und/oder Plasmabehandlung und/oder induktive Beaufschlagung und/oder eine Gasflamme erfolgen. Die Wahl der thermischen Quelle sowie die jeweilige Leistung der thermischen Quelle wird an eine jeweilige Bahngeschwindigkeit angepaßt. Die Anpassung kann beispielsweise durch eine kaskadenartige Zuschaltung von einzelnen Aktivierungsstationen (42) erfolgen. Ebenfalls ist es möglich, die Leistungsabgabe einzelner oder aller Aktivierungsstationen zu variieren. Durch die Kombination der vorstehend beschriebenen Maßnahmen ist es insbesondere möglich, eine energetische Anlauframpe zu realisieren.

In Transportrichtung des bahnförmigen Materials (1) hinter der Aktivierungsstation (42) sind Zugwalzen (43) sowie ein weiterer Spannungssensor (44) zur Erfassung einer lokalen Bahnspannung angeordnet. Eine abschließende Bearbeitung des bahnförmigen Materials (1) erfolgt im Bereich einer Fertigfaltstation (45). Die Fertigfaltstation (45) dient im wesentlichen dazu, das flache bahnförmige Material (1) in den gefalteten schlauchartigen Zustand zu überführen und die Siegelnaht (8) zu erzeugen.

Eine Ausrichtung der Materialbahnen erfolgt zunächst durch eine Bahnkantenregelung (46). Anschließend erfolgt im Bereich einer Formstation (47) unter Verwendung der in Fig. 1 dargestellten Führungselemente (2) ein Umlegen des Materials entlang der in Fig. 2 dargestellten Materialschwächungen (5). Die hierbei entstehende schmale Umlegenaht wird vor dem Verbinden der beiden Bahnkanten durch die Siegelnaht (8) zunächst von einem Finger (48) fixiert. Nach dieser Fixierung werden die beiden zuvor erhitzten Bahnkanten durch Anpreßrollen (49) miteinander verpreßt. Durch den Preßvorgang erfolgt eine Verschweißung des erhitzten Polyethylens der beiden äußeren Laschen zur Bereitstellung einer kraftschlüssigen Verbindung.

Nach der Durchführung dieses verbindungsvorganges werden in einer Bügelstation (50) ausschließlich die beiden außen liegenden Nuten des zuvor hergestellten Packungsschlauches gebügelt, um ein Aufspringen der mantelartigen Kontur des Verpackungszuschnittes bei einer späteren Verwendung sicherzustellen. Eine Abkühlung der erhitzen Streifen erfolgt unter Verwendung von Kühlwalzen (51).

In Transportrichtung des bahnförmigen Materials (1) zwischen den Anpreßrollen (49) und den Kühlwalzen (51) ist eine Qualitätserfassung (52) angeordnet. Die Qualitätserfassung (52) ermittelt unter Verwendung entsprechender Sensoren die Lage und die Abmessungen der Siegelnaht (8) und führt eine Abspeicherung dieser Meßinformationen in der Meßdatenabspeicherung durch. Die Qualitätserfassung (52) ist über eine zugeordnete Steuerung mit der Bahnkantenregelung (46) verbunden, um eine automatische Verstellung vorzunehmen.

In Transportrichtung des bahnförmigen Materials (1) hinter den Kühlwalzen (51) sind Zugwalzen (53) oder Zugriemen sowie eine Querschneideinrichtung (54) angeordnet. Die Querschneideinrichtung (54) ist typischerweise mit Quermessern ausgestattet. Besonders bevorzugt werden hierzu rotierende Messer verwendet. Die Querschneideinrichtung (54) zertrennt das schlauchartig gefaltete bahnförmige Material entlang der in Fig. 2 dargestellten Trennlinien (9). Hierbei entstehen die bereits erwähnten Pakkungsmäntel als einzelne Zuschnitte. Die einzelnen Zuschnitte werden unter Verwendung von Abzugsrollen (55) oder Riemenführungen aus dem Bereich der Querschneideinrichtung (54) weggefördert.

Vor einer Durchführung des Schneidvorganges unter Verwendung der Querschneideinrichtung (54) ist es erforderlich, eine exakte Zuordnung des zu zertrennenden schlauchartig zusammengelegten bahnförmigen Materials in Längsrichtung zu den jeweiligen Messern vorzunehmen. Diese Zuordnung kann wiederum unter Verwendung der beim Druckvorgang aufgebrachten Steuerungsmarke erfolgen. Es ist auch möglich, die Position einer oder mehrerer Rill-Linien auszuwerten. Ein Sensor (56) erfaßt die Position dieser Steuerungsmarke oder anderer Markierungen und stellt die Meßinformationen einer Steuerung für den Antrieb der Querschneideinrichtung (54) bereit. Der Antrieb wird entsprechend geregelt, damit die Längen der Einzelzuschnitte und die Lage der erzeugten Schnitte relativ zum Druckbild innerhalb vorgegebener Toleranzintervalle liegen.

Insbesondere ist daran gedacht, für jede der unter Verwendung der Längsschneideinrichtung (25) hergestellten Einzelbahnen separate Querschneideinrichtungen (54) und Zugwalzen (53) zu verwenden.

Durch den Einsatz einer Ausschleusungsstation (57) ist es möglich, fehlerhafte Packungsmäntel basiert auf den Meßdaten, die von der Qualitätserfassung (52) bereitgestellt werden, auszusortieren oder für den Fall der Einhaltung der Qualitätsanforderungen weiter zu transportieren.

Packungsmäntel mit einer Qualität innerhalb des vorgegebenen Toleranzspektrums werden von einer Schuppenstation (58) schuppenartig übereinandergestapelt und in mehreren Bahnen entsprechend schuppenförmig abgelegt. Ein Abtransport der entsprechenden Stapel von Packungsmänteln erfolgt unter Verwendung einer Fördereinrichtung (59), die typischerweise als ein Förderband ausgebildet ist.

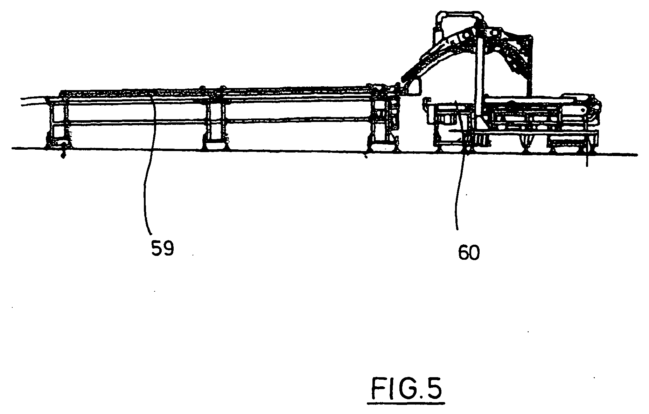

Fig. 5 zeigt einen abschließenden Anlagenteil mit der Fördereinrichtung (59) sowie einer Packmaschine (60), in der die gestapelten Verpackungsmäntel in Umkartons verpackt werden. Typischerweise beinhaltet jeder dieser Umkartons etwa 300 Pakkungsmäntel.

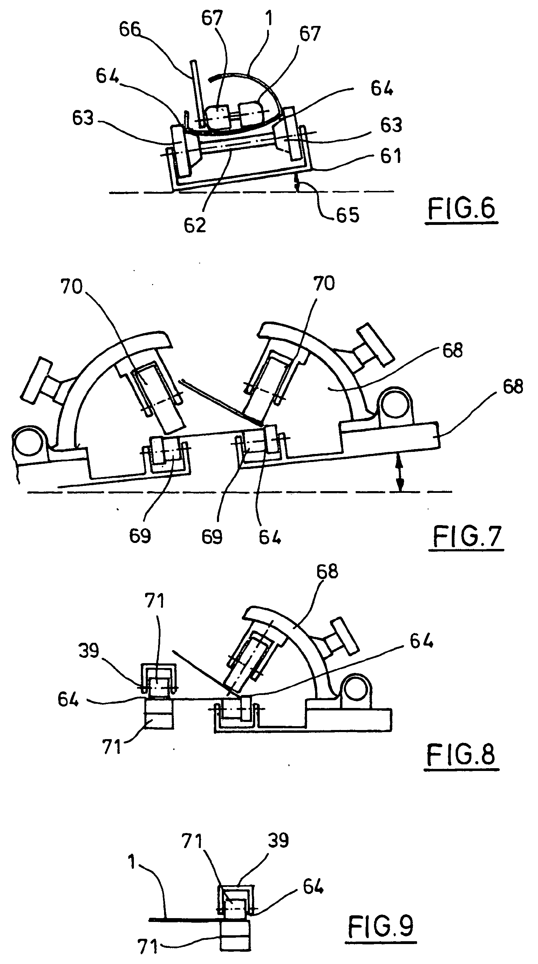

In Fig. 6 bis Fig. 9 ist eine erste Ausführungsvariante zur Realisierung der Formeinrichtung (38) im Bereich der Vorfaltstation (37) abgebildet. Zur Zuführung des bahnförmigen Materials (1) weist die Formeinrichtung (38) Lenkrollen auf, auf denen die zu formende Bahn aufliegt. Unter Verwendung von Zugwalzen, die vor der betreffenden Lenkrolle und hinter der Bügelstation (39) angeordnet sind, wird eine definierte Bahnspannung erzeugt. Unter Verwendung eines Bahnkantensensors wird die Lage der Bahn gemessen und die hierdurch erfaßten Informationen an die zugeordnete Maschinensteuerung weitergegeben. Von der Maschinensteuerung erfolgt eine Regelung der Lenkrollen, um die Bahn in der voreingestellten radialen Position zu halten. Gemäß einer einfachen Ausführungsform sind die Lenkrollen zylindrisch ausgebildet. Es ist aber auch möglich, eine ballige Rollenkontur zu verwenden.

Die zunächst im wesentlichen horizontal angeordnete Bahn kann über schräg gestellte Rollen relativ zur vorgenommenen Lineareinformung angestellt werden, um den sich ergebenden Drall auszugleichen. Hierdurch ist es möglich, die Bahnkanten für die Herstellung der Längsnähte zu orientieren. Die Positionierung und die Schrägstellung der erwähnten Rollen wird vorzugsweise von der Maschinensteuerung geregelt. Der jeweils optimale Winkel ist abhängig von den konkreten Längenverhältnissen der umzulegenden Bahnlaschen.

Fig. 6 veranschaulicht, daß das bahnförmige Material (1) von einem ersten Formelement (61) einem ersten Formungsschritt unterworfen wird. Eine Auflagerolle (62) ist hierbei wie bereits erwähnt schräg zur horizontalen Richtung angeordnet. Eine Seitenführung erfolgt unter Verwendung von Kegelrollen (63). Das bahnförmige Material (1) wird hierdurch entlang von Längsnuten (64) umgebogen.

Die Kegelrollen (63) führen im Bereich eines vorgegebenen Führungsprofils das bahnförmige Material (1) exakt im Bereich der Längsnuten (64) und stellen hierdurch einen Anschlag bereit. Ein Andruck des bahnförmigen Materials (1) in Richtung auf die Auflagerollen (62) erfolgt durch eine Andrückeinrichtung (66), die mit Andruckrollen (67) versehen ist.

Fig. 7 zeigt ein zweites Formelement (68) der Formeinrichtung (38). Auch hier liegt ein Einstellwinkel (65) relativ zur horizontalen Richtung vor.

Das zweite Formelement (68) weist Unterrollen (69) sowie Oberrollen (70) auf. Die Oberrollen (70) können beispielsweise jeweils separat angetrieben sein, um eine gegebenenfalls unter Verwendung von Sensoren erfaßte ungleiche axiale Lage von Bahnkanten relativ zueinander durch von der Maschinensteuerung vorgegebene unterschiedliche Drehzahlen der Oberrollen (70) auszugleichen.

Das zweite Formelement (68) dient im wesentlichen dazu, die Laschen und die Mittelbahn in den Längsnuten (64) gerade zu formen.

Die vom zweiten Formelement (68) gerade geformten Längsnuten (64) werden im Bereich der in Fig. 8 dargestellten Bügelstation (39) gebügelt. Ein Abstand von Bügelrollen (71) der Bügelstation (39) relativ zueinander ist verstellbar, um ein Brechen der Kartonfasern variieren zu können.

Fig. 8 veranschaulicht, daß die Verwendung der Bügelstation (39) sowie die Verwendung des zweiten Formelementes (68) versetzt erfolgt. Dies ermöglicht es, äußerst raumsparend zuerst die kurze Lasche umzulegen und zu bügeln und dann die große Lasche auf die kleine Lasche umzulegen und zu bügeln.

Fig. 9 zeigt eine örtliche Anwendung, bei der das bahnförmige Material (1) im Bereich der Längsnut (64) nur von zwei Bügelrollen (71) der Bügelstation (39) beaufschlagt wird.

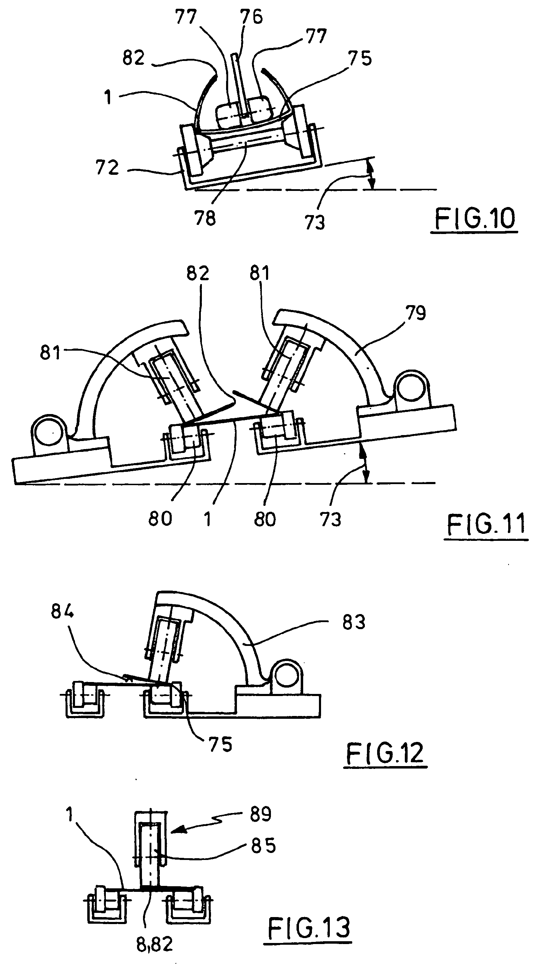

In Fig. 10 bis Fig. 13 wird eine erste Ausführungsvariante zur Realisierung der Fertigfaltstation (45) veranschaulicht. Fig. 10 zeigt ein erstes Formelement (72), das mit einem Einstellwinkel (73) abgeschrägt zur horizontalen Richtung ausgerichtet ist. Ähnlich wie das erste Formelement (61) der Vorfaltstation (37) wird das bahnförmige Material (1) unter Verwendung von Kegelrollen (74) derart geformt, daß die Längsnuten (75) gerade geformt werden. Eine Andruckeinrichtung (76) mit Andruckrollen (77) verspannt das bahnförmige Material (1) gegenüber einer Querrolle (78), die die Kegelrollen (74) miteinander verbindet.

Auch das in Fig. 11 dargestellte zweite Formelement (79) der Fertigfaltstation (45) ist mit einem Anstellwinkel (73) schräg zur horizontalen Richtung ausgerichtet. Ähnlich wie bei der Vorfaltung gemäß Fig. 7 erfolgt eine Faltung unter Verwendung von Unterrollen (80) sowie Oberrollen (81). Die Umlegenaht (82) wird hierdurch mit der zugeordneten Lasche nach unten geführt.

Fig. 12 zeigt einen vorbereitenden Schritt zur Herstellung der in Fig. 13 veranschaulichten Siegelnaht (8). Ein drittes Formelement (83) führt hierzu die zugeordnete Lasche durch eine Verschwenkung um die Längsnut (75) nach unten. Ein Führungselement (84) fixiert im Bereich des dritten Formelementes (83) die in Fig. 11 dargestellte Umlegenaht (82), damit diese parallel mit der gegenüberliegenden Lasche des Zuschnittes verbunden werden kann. Das Führungselement (84) kann beispielsweise als Finger oder kleine Rollenschiene ausgebildet sein. Gemäß einer alternativen Ausführungsform wird die Umlegenaht (82) bereits in einem Vorprozeß nach der Durchführung des Schälens und Umlegens unter Verwendung von Klebstoff bei der Durchführung des Bügelvorganges fixiert. Bei einer derartigen Prozeßvariante kann das Führungelement (84) entfallen.

Fig. 13 veranschaulicht einen abschließenden Prozeßschritt, in dem die in der Zeichnung gezeigte rechte Lasche auf die in der Schälstation (28) hergestellte Umlegenaht (82) gelegt und die Lasche und die Naht dann von einer Siegelrolle (85) miteinander verschweißt werden. Das zuvor aktivierte Polyethylen des Materials fließt hierdurch ineinander und erzeugt die Siegelnaht (8). Die Siegelnaht (8) hat hierbei aseptische Eigenschaften.

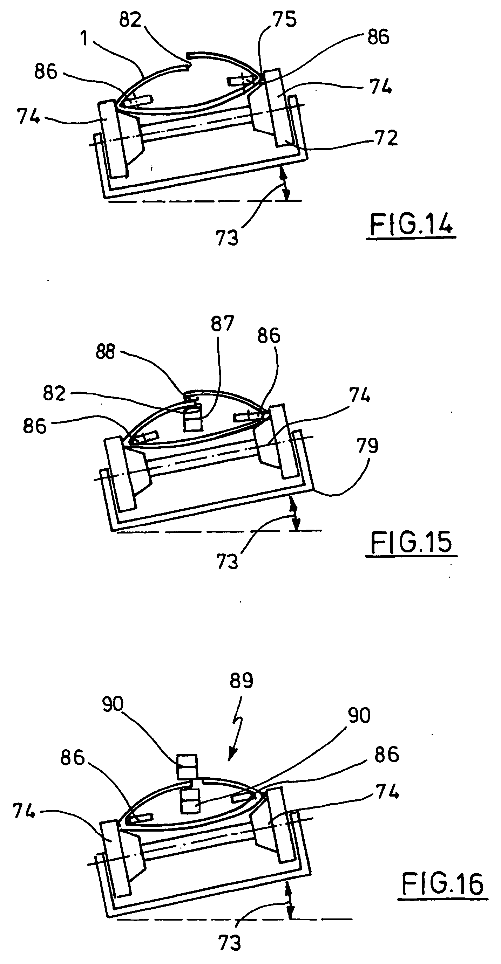

In Fig. 14 bis Fig. 16 ist eine zweite Ausführungsvariante der Fertigfaltstation (45) veranschaulicht. Bei dieser Ausführungsform wird durch das erste Formelement (72) der Fertigfaltstation (45) ein im wesentlichen ellyptisches Hohlprofil eingeformt. Es liegt wiederum ein Anstellwinkel (73) des ersten Formelementes (72) relativ zur horizontalen Richtung vor. Zusätzlich zu den Kegelrollen (74) werden die Laschen des bahnförmigen Materials (1) im Kantenbereich übereinander gelegt, wobei die Lasche mit der Umlegenaht (82) innen angeordnet ist. Das bahnförmige Material (1) wird zusätzlich von innenliegenden Führungsrollen (86) geführt, damit die zu bügelnden Längsnuten (75) jeweils in den Knickprofilen der Kegelrollen (74) anliegen.

Fig. 15 zeigt einen folgenden Produktionsschritt, bei dem unter Verwendung einer innen liegenden Führungseinrichtung (87) ein Zusammenlegen der einander zugewandten Laschen im Bereich der Umlegenaht (82) erfolgt. Zusätzlich kann ähnlich wie bei der Ausführungsform gemäß Fig. 12 eine weitere Führungseinrichtung (88) verwendet werden.

Fig. 16 zeigt eine Abwandlung zur Siegelstation (89) gemäß Fig. 13. Es kommen hier zwei Siegelrollen (90) zum Einsatz, die einander gegenüberliegend angeordnet sind.

## Patentansprüche

1. Verfahren zur Herstellung von behälterartigen Verbundverpackungen, bei dem ein bahnförmiges Material (1) aus einem Verbund, der mindestens eine Lage aus Karton und mindestens eine Lage aus einem Kunststoff enthält, gefaltet, mit einer Siegelnaht (8) versehen und in jeweils zur Ausbildung eines Behälters vorgesehene Abschnitte zertrennt wird, sowie bei dem die Siegelnaht (8) vor einer Zertrennung des bahnförmigen Materials (1) in einzelne Abschnitte erzeugt wird, **dadurch gekennzeichnet, daß** die Herstellung der Siegelnaht (8) nach einem Falten des bahnförmigen Materials und nach einem Zusammenlegen der gefalteten Struktur zu einem flachen schlauchartigen Gebilde durchgeführt wird und die Herstellung der Siegelnaht (8) nach der Durchführung von vorbereitenden Maßnahmen, nämlich Schälen, Rillen, Umlegen und Bügeln von Bahnkanten durchgeführt wird.

2. Verfahren nach Anspruch 1, **dadurch gekennzeichnet, daß** zur Ausbildung von Faltlinien das bahnförmige Material (1) gerillt wird.

3. Verfahren nach Anspruch 1 oder 2, **dadurch gekennzeichnet, daß** das bahnförmige Material (1) gefalzt wird.

4. Verfahren nach einem der Ansprüche 1 bis 3, **dadurch gekennzeichnet, daß** eine Faltung und Versiegelung zur Bereitstellung eines Behälters mit einer Querschnittfläche ausgewählt aus der Gruppe "im wesentlichen rechteckförmig, rund, gerundet, ellyptisch, polygonal eckig, polygonal gerundet" durchgeführt wird.

5. Verfahren nach einem der Ansprüche 1 bis 4, **dadurch gekennzeichnet, daß** die Siegelnaht (8) durch ein Verschmelzen von Kunststoffanteilen des behälterförmigen Materials (1) durchgeführt wird.

6. Verfahren nach einem der Ansprüche 1 bis 5, **dadurch gekennzeichnet, daß** die Siegelnaht (8) nach einem Falten des bahnförmigen Materials (1) um einen Innenraum herum durchgeführt wird.

7. Verfahren nach einem der Ansprüche 1 bis 6, **dadurch gekennzeichnet, daß** die Siegelnaht aseptisch hergestellt wird.

8. Vorrichtung zur Herstellung von behälterartigen Verbundverpackungen, die eine Transporteinrichtung für ein bahnförmiges Material (1) aus einem Verbund aufweist, der aus mindestens einer Lage aus Karton und mindestens einer Lage aus einem Kunststoff besteht, sowie die mindestens eine Falteinrichtung für das bahnförmige Material (1), mindestens eine Siegeleinrichtung (7) zur Erzeugung einer Siegelnaht und mindestens eine Trenneinrichtung zur Unterteilung des bahnförmigen Materials in einzelne zur Ausbildung eines Behälters vorgesehene Abschnitte aufweist, sowie bei der in einer Transportrichtung des bahnförmigen Materials (1) die Siegeleinrichtung (7) vor der Trenneinrichtung angeordnet ist, **dadurch gekennzeichnet, daß** die Falteinrichtung für ein Falten des bahnförmigen Materials (1) und für ein Zusammenlegen der gefalteten Struktur zu einem flachen, schlauchartigen Gebilde ausgebildet ist und daß die Falteinrichtung in der Transportrichtung des bahnförmigen Materials (1) vor der Siegeleinrichtung angeordnet ist und daß eine Schälstation zur Durchführung von vorbereiteten Maßnamen zur Herstellung der Siegelnaht, nämlich Schälen, Rillen, Umlegen und Bügeln von Bahnkanten verwendet ist.

9. Vorrichtung nach Anspruch 8, **dadurch gekennzeichnet, daß** die Vorrichtung eine Rilleinrichtung für das bahnförmige Material (1) aufweist.

10. Vorrichtung nach Anspruch 8, **dadurch gekennzeichnet, daß** die Vorrichtung eine Falzeinrichtung für das bahnförmige Material (1) aufweist.

11. Vorrichtung nach einem der Ansprüche 8 bis 10, **dadurch gekennzeichnet, daß** die Falteinrichtung zur Faltung des bahnförmigen Materials (1) für einen Behälter mit einer Querschnittfläche ausgewählt aus der Gruppe "im wesentlichen rechteckförmig, rund, gerundet, elliptisch, polygonal eckig, polygonal gerundet" ausgebildet ist.

12. Vorrichtung nach einem der Ansprüche 8 bis 11, **dadurch gekennzeichnet, daß** die Siegeleinrichtung (7) zum Verschmelzen von Kunststoffen ausgebildet ist.

13. Vorrichtung nach einem der Ansprüche 8 bis 12, **dadurch gekennzeichnet, daß** die Siegeleinrichtung (7) zur Beaufschlagung einer im wesentlichen zusammengefalteten Struktur ausgebildet ist.

14. Vorrichtung nach einem der Ansprüche 8 bis 12, **dadurch gekennzeichnet, daß** die Siegeleinrichtung (7) zur Beaufschlagung einer räumlichen Struktur, die einen Innenraum umschließt, ausgebildet ist.

## Claims

1. A process for manufacturing container-type composite packagings, in which a web-shaped material (1) made of a composite material, which contains at least one layer of cardboard and at least one layer of a plastics material, is folded, provided with a sealed seam (8) and separated into portions which are in each case provided to form a container, and in which the sealed seam (8) is generated before the web-shaped material (1) is separated into individual portions, **characterised in that** the production of the sealed seam (8) is carried out after the web-shaped material is folded and after the folded structure is collapsed into a flat tube-like form, and the production of the sealed seam (8) is carried out after the implementation of preparatory measures, namely paring, creasing, turning-over and pressing web edges.

2. A process according to Claim 1, **characterised in that** the web-shaped material (1) is creased to form fold lines.

3. A process according to Claim 1 or 2, **characterised in that** the web-shaped material (1) is folded.

4. A process according to one of Claims 1 to 3, **characterised in that** folding and sealing is carried out to provide a container with a cross-sectional surface selected from the group "substantially rectangular, circular, rounded, elliptical, polygonally angled, polygonally rounded".

5. A process according to one of Claims 1 to 4, **characterised in that** the sealed seam (8) is produced by melting plastics constituents of the web-shaped material (1).

6. A process according to one of Claims 1 to 5, **characterised in that** the sealed seam (8) is produced after folding the web-shaped material (1) around an interior space.

7. A process according to one of Claims 1 to 6, **characterised in that** the sealed seam is produced aseptically.

8. A device for manufacturing container-type composite packagings, which has a transport means for a web-shaped material (1) made of a composite material, which comprises at least one layer of cardboard and at least one layer of a plastics material, and which has at least one folding means for the web-shaped material (1), at least one sealing means (7) for generating a sealed seam and at least one separating means for dividing the web-shaped material into individual portions provided for forming a container, and in which the sealing means (7) is arranged upstream of the separating means in a transport direction of the web-shaped material (1), **characterised in that** the folding means is designed to fold the web-shaped material (1) and to collapse the folded structure into a flat tube-like form, and **in that** the folding means is arranged upstream of the sealing means in the transport direction of the web-shaped material (1) and **in that** a paring station is used to carry out preparatory measures for producing the sealed seam, namely paring, creasing, folding-over and pressing web edges.

9. A device according to Claim 8, **characterised in that** the device has a creasing means for the web-shaped material (1).

10. A device according to Claim 8, **characterised in that** the device has a folding means for the web-shaped material (1).

11. A device according to one of Claims 8 to 10, **characterised in that** the folding means for folding the web-shaped material (1) is designed for a container with a cross-sectional surface selected from the group "substantially rectangular, circular, rounded, elliptical, polygonally angled, polygonally rounded".

12. A device according to one of Claims 8 to 11, **characterised in that** the sealing means (7) is designed for melting plastics materials.

13. A device according to one of Claims 8 to 12, **characterised in that** the sealing means (7) is designed to act on a substantially collapsed structure.

14. A device according to one of Claims 8 to 12, **characterised in that** the sealing means (7) is designed to act on a three-dimensional structure which encloses an interior space.

## Revendications

1. Procédé de fabrication d'emballages composites genre conteneurs, dans lequel un matériau composite en forme de bande (1) contenant au moins une couche de carton et au moins une couche de matière synthétique, est plié, pourvu d'un cordon de scellement (8) et divisé en sections prévues pour former un conteneur, ainsi que dans lequel le cordon de scellement (8) est exécuté avant la division du matériau en forme de bande (1) en sections individuelles,
**caractérisé en ce que** la réalisation du cordon de scellement (8) a lieu après un pliage du matériau en forme de bande et après un agencement de la structure pliée pour former un complexe plat, genre tuyau, et que la réalisation du cordon de scellement (8) a lieu après l'exécution de mesures préparatoires, en l'occurrence ; pelage, rainurage, pliage et repassage des bords de la bande.

2. Procédé selon la revendication 1,
**caractérisé en ce que** pour la formation des lignes de plis, le matériau en forme de bande (1) est rainuré.

3. Procédé selon revendication 1 ou 2,
**caractérisé en ce que** le matériau en forme de bande (1) est serti.

4. Procédé selon l'une des revendications 1 à 3,
**caractérisé en ce que** le pliage et le scellement pour la réalisation d'un conteneur sont exécutés avec une surface de section transversale choisie dans le groupe « sensiblement rectangulaire, ronde, arrondie, elliptique, polygonale angulaire, polygonale arrondie ».

5. Procédé selon l'une des revendications 1 a 4,
**caractérisé en ce que** le cordon de scellement (8) est exécuté par une fusion de parties de matière synthétique du matériau en forme de bande (1).

6. Procédé selon l'une des revendications 1 à 5,
**caractérisé en ce que** le cordon de scellement (8) est exécuté après un pliage du matériau en forme de bande (1) autour d'un espace intérieur.

7. Procédé selon l'une des revendications 1 à 6,
**caractérisé en ce que** le cordon de scellement (8) est fabriqué de manière aseptique.

8. Dispositif destiné à la fabrication d'emballages composites qui comprend un dispositif de transport pour un matériau composite en forme de bande (1) qui est composé d'au moins une couche de carton et au moins une couche de matière synthétique, ainsi qu'au moins un dispositif de pliage du matériau en forme de bande (1), au moins un dispositif de scellement (7) pour la réalisation d'un cordon de scellement et d'au moins un dispositif de sectionnement pour diviser le matériau en forme de bande (1) en sections individuelles, prévues pour former le conteneur, ainsi que dans lequel le dispositif de scellement (7) est disposé, en amont du dispositif de sectionnement, dans une direction de transport du matériau en forme de bande (1),
**caractérisé en ce que** le dispositif de pliage est conçu pour un pliage du matériau en forme de bande (1) et pour un agencement de la structure pliée pour former un complexe plat, genre tuyau, et que le dispositif de pliage est disposé en amont du dispositif de scellement dans la direction de transport du matériau en forme de bande (1), et qu'un poste est prévu pour l'exécution de mesures préparatoires, pour la réalisation du cordon de scellement, en l'occurrence pour gratter, rainurer, rabattre et repasser les bords de la bande.

9. Dispositif selon la revendication 8,
**caractérisé en ce que** le dispositif est doté d'un dispositif de rainurage du matériau en forme de bande (1).

10. Dispositif selon la revendication 8,
**caractérisé en ce que** le dispositif est doté d'un dispositif de sertissage du matériau en forme de bande (1).

11. Dispositif selon l'une des revendications 8 à 10,
**caractérisé en ce que** le dispositif de pliage est conçu pour le pliage du matériau en forme de bande (1) pour réaliser un conteneur doté d'une surface de section transversale choisie dans le groupe « sensiblement rectangulaire, ronde, arrondie, elliptique, polygonale angulaire, polygonale arrondie ».

12. Dispositif selon l'une des revendications 8 à 11,
**caractérisé en ce que** le dispositif de scellement (7) est réalisé pour fusionner des matières synthétiques.

13. selon l'une des revendications 8 à 12,
**caractérisé en ce que** le dispositif de scellement (7) est conçu pour traiter une structure sensiblement pliée.

14. Dispositif selon l'une des revendications 8 à 12,
**caractérisé en ce que** le dispositif, de scellement (7) est conçu pour traiter une structure qui forme une enceinte.
